# EUROPEAN PATENT APPLICATION

(11) **EP 1 862 357 A1**
(43) Date of publication of application: **05.12.2007**
(21) Application number: 05820406.6
(22) Date of filing: 26.12.2005
(51) Int. Cl.: B60R 16/02, B60G 17/015, B60H 1/00, B60J 1/00, B60J 5/00, B60R 22/46, E05B 65/20, E05F 15/20

(54) **CAR BODY EQUIPMENT CONTROL DEVICE AND CAR BODY EQUIPMENT CONTROL METHOD**

(30) Priority: 23.03.2005 JP 2005084319
(71) Applicant: FUJITSU TEN LIMITED, Kobe-shi Hyogo 652-8510 (JP)
(72) Inventor: HARUMOTO, Satoshi c/o FUJITSU TEN LIMITED, Hyogo 6528510 (JP); MATSUDA, Yuusaku c/o FUJITSU TEN LIMITED, Hyogo 6528510 (JP); NOMURA, Tetsuya c/o FUJITSU TEN LIMITED, Hyogo 6528510 (JP); OOTA, Mitsuru c/o FUJITSU TEN LIMITED, Hyogo 6528510 (JP); YAMAO, Hiroaki c/o FUJITSU TEN LIMITED, Hyogo 6528510 (JP); SEIKE, Yasushi c/o FUJITSU TEN LIMITED, Hyogo 6528510 (JP)
(74) Representative: Skone James, Robert Edmund
(86) International application number: PCT/JP2005/023801
(87) International publication number: WO 2006/100813

(57) **Abstract**

The situation determining unit 11 determines a situation (scene) at which a vehicle is currently located, based on an output from the navigation device 2, the input device 3, the vehicle control system 4, the optical sensor 31, the rainfall sensor 32, the vehicle speed sensor 33, the smoking sensor 34, the outdoor temperature sensor 35, the indoor temperature sensor 36, the radar 37, and the camera 38, in addition to a driving history (such as home address, parking place, departure time, driving route, destination, arrival time, routed place, parking duration) stored in a memory. The control processing unit 14 performs a control of the on-vehicle equipment 6 depending on the situation (scene) obtained as a determination result from the situation determining unit 11. The arbitration processing unit 12 performs a settlement of a conflict when a conflict occurs between control requests for the vehicle equipment. The interlock processing unit 13 performs a process of generating a control request for other vehicle equipment, in conjunction with the contents of a control of the control processing unit 14. With this mechanism, an integrated control of a plurality of vehicle equipments appropriate for a situation a vehicle currently faces is performed.

## Description

### TECHNICAL FIELD

The present invention relates to an on-vehicle equipment control device and an on-vehicle equipment control method of controlling a vehicle equipment equipped on a vehicle, and more particularly, to an on-vehicle equipment control device and an on-vehicle equipment control method for automatically selecting and performing an appropriate control in accordance with a situation.

### BACKGROUND ART

Various equipments, so called outfits, are equipped on a vehicle. The outfits (a vehicle equipment) include, for example, an air conditioning mechanism that performs an air conditioning inside a vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp, such as a headlight and a turn signal, an indoor lighting mechanism, including an indoor light and an indicator, that performs a lighting inside the vehicle, a door opening/closing mechanism that opens and closes a door, a door lock mechanism that locks a door, and a vehicle-level control mechanism that controls a vehicle level.

The above vehicle equipments have been operated by passengers including a driver; however, a technology for automatically performing above operations has been developed recently. For example, patent document 1 discloses a technology for automatically locking a vehicle door when a vehicle speed reaches a predetermined speed. Similarly, patent document 2 discloses an automatic vehicle-light ON/OFF apparatus that automatically turns ON and OFF a vehicle light depending on a brightness around the vehicle.

Patent document 1: Japanese Patent Application Laid-Open No. 2003-138823
Patent document 2: Japanese Patent Application Laid-Open No. H10-44860

### DISCLOSURE OF INVENTION

### PROBLEM TO BE SOLVED BY THE INVENTION

However, with the conventional technology, each of the vehicle equipments is individually controlled, and a predetermined operation is exclusively performed when a simple condition is satisfied. Therefore, a technology for integrally controlling a plurality of vehicle equipments depending on a situation a vehicle faces is significantly required.

The present invention has been achieved to solve the above problems in the conventional technology and it is an object of the present invention to provide an on-vehicle equipment control device and an on-vehicle equipment control method of integrally controlling a plurality of vehicle equipments, depending on a situation a vehicle faces.

### MEANS FOR SOLVING PROBLEM

To solve the above problems and to achieve the object, an on-vehicle equipment control apparatus according to the invention set forth in claim 1 controls an on-vehicle equipment equipped on a vehicle. The on-vehicle equipment control apparatus includes a situation determining unit that determines a situation the vehicle currently faces; a control processing unit that performs a control of the vehicle equipment based on a result of determination by the situation determining unit; and an arbitration processing unit that determines, when a conflict of control requests for the vehicle equipment occurs, contents of the control by settling the conflict of the control requests. The control processing unit performs the control based on the contents of the control determined by the arbitration processing unit.

According to the invention set forth in claim 1, the on-vehicle equipment control apparatus determines a situation a vehicle currently faces, performs a control of a vehicle equipment based on a determination result, and arbitrates contents of controls when a conflict of control requests occurs.

Furthermore, in the on-vehicle equipment control apparatus according to the invention set forth in claim 2, when different control requests are issued to an identical vehicle equipment, the arbitration processing unit performs setting a priority in the control requests, adjusting a timing of performing each of the controls, and adjusting an amount for each of the controls.

According to the invention set forth in claim 2, the on-vehicle equipment control apparatus performs a control of the vehicle equipment by determining a situation a vehicle currently faces, so that, when a conflict of control requests occurs, the on-vehicle equipment control apparatus sets a priority relation between controls, adjusts a timing of performing a control, and adjusts amounts for the control.

Moreover, the on-vehicle equipment control apparatus according to the invention set forth in claim 3 further includes an interlock processing unit that generates a control request for other vehicle equipment in conjunction with the contents of the control determined by the control processing unit.

According to the invention set forth in claim 3, the on-vehicle equipment control apparatus generates a control request for other vehicle equipment in conjunction with contents of control, as well as to perform a control of the vehicle equipment by determining a situation a vehicle currently faces.

Furthermore, in the on-vehicle equipment control apparatus according to the invention set forth in claim 4, upon receiving an input of a control instruction from a passenger, the control processing unit processes the control instruction in priority to a control from any one of the arbitration processing unit and the interlock processing unit.

According to the invention set forth in claim 4, the on-vehicle equipment control apparatus performs a control of the vehicle equipment by determining a situation a vehicle currently faces, and prioritizes a control instruction input by a passenger when performing an arbitration or an interlocked operation of controls.

Moreover, in the on-vehicle equipment control apparatus according to the invention set forth in claim 5, the vehicle equipment includes at least one of an air conditioning mechanism that performs an air conditioning inside the vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp including a headlight and a turn signal, an indoor lighting mechanism, including an indoor light and an indicator, which performs a lighting inside the vehicle, a door opening/closing mechanism that opens and closes a door, a door lock mechanism that locks a door, and a vehicle-level control mechanism that controls a level of the vehicle.

According to the invention set forth in claim 5, the on-vehicle equipment control apparatus controls, by determining a situation a vehicle currently faces, an air conditioning mechanism that performs an air conditioning inside a vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp, such as a headlight and a turn signal, an indoor lighting mechanism, including an indoor light and an indicator, that performs a lighting inside the vehicle, a door opening/closing mechanism that opens and closes a door, a door lock mechanism that locks a door, and a vehicle-level control mechanism that controls a vehicle level.

Furthermore, in the on-vehicle equipment control apparatus according to the invention set forth in claim 6, the situation determining unit determines the situation based on at least one of time, predetermine path, vehicle location, rainfall outside the vehicle, light intensity outside the vehicle, identification of a passenger, smoking state of a passenger, external temperature, indoor temperature, and existence of a person near the vehicle.

According to the invention set forth in claim 6, the on-vehicle equipment control apparatus determines a situation a vehicle currently faces, using a time, a predetermine path, a vehicle location, a rainfall outside a vehicle, a light intensity outside a vehicle, an identification of a passenger, a smoking state of a passenger, an external temperature, an indoor temperature, and an existence of a person around a vehicle, and performs a control of the vehicle equipment based on a determination result.

Moreover, in the on-vehicle equipment control apparatus according to the invention set forth in claim 7, the situation determining unit determines the situation based on running condition of the vehicle.

According to the invention set forth in claim 7, the on-vehicle equipment control apparatus determines a situation a vehicle currently faces, using a running condition of the vehicle, and performs a control of the vehicle equipment based on a determination result.

Furthermore, in the on-vehicle equipment control apparatus according to the invention set forth in claim 8, the situation determining unit classifies the running condition into parking, getting on the vehicle, preparation for driving, running, preparation for getting off the vehicle, and getting off the vehicle.

According to the invention set forth in claim 8, the on-vehicle equipment control apparatus determines a situation a vehicle currently faces based on whether the running condition of the vehicle is in any one of a parking, a getting on a vehicle, a preparation for a driving, a driving, a preparation for getting off a vehicle, and a getting off a vehicle.

Moreover, an on-vehicle equipment control method according to claim 9 is for controlling an on-vehicle equipment equipped on a vehicle. The on-vehicle equipment control method includes a situation determining step of determining a situation the vehicle currently faces; a control processing step of performing a control of the vehicle equipment based on a result of determination at the situation determining step; and an arbitration processing step of determining, when a conflict of control requests for the vehicle equipment occurs, contents of the control by settling the conflict of the control requests. The control processing step includes performing the control based on the contents of the control determined at the arbitration processing step.

According to the invention set forth in claim 9, an on-vehicle equipment control method includes determining a situation a vehicle currently faces, performs a control of a vehicle equipment based on a determination result, and arbitrating contents of controls when a conflict of control requests occurs.

Furthermore, in the on-vehicle equipment control method according to claim 10, when different control requests are issued to an identical vehicle equipment, the arbitration processing step includes setting a priority in the control requests, adjusting a timing of performing each of the controls, and adjusting an amount for each of the controls.

According to the invention set forth in claim 10, the on-vehicle equipment control method includes performing a control of the vehicle equipment by determining a situation a vehicle currently faces, so that, when a conflict of control requests occurs, the on-vehicle equipment control method includes setting a priority relation between controls, adjusting a timing of performing a control, and adjusting amounts for the control.

Moreover, the on-vehicle equipment control method according to claim 11 further includes an interlock processing step of generating a control request for other vehicle equipment in conjunction with the contents of the control determined at the control processing step.

According to the invention set forth in claim 11, the on-vehicle equipment control method includes generating a control request for other vehicle equipment in conjunction with contents of control, as well as performing a control of the vehicle equipment by determining a situation a vehicle currently faces.

Furthermore, in the on-vehicle equipment control method according to claim 12, upon receiving an input of a control instruction from a passenger, the control processing step includes processing the control instruction in priority to a control from any one of the arbitration processing step and the interlock processing step.

According to the invention set forth in claim 12, the on-vehicle equipment control method includes performing a control of the vehicle equipment by determining a situation a vehicle currently faces, and prioritizing a control instruction input by a passenger when performing an arbitration or an interlocked operation of controls.

Furthermore, in the on-vehicle equipment control method according to claim 13, the vehicle equipment includes at least one of an air conditioning mechanism that performs an air conditioning inside the vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp including a headlight and a turn signal, an indoor lighting mechanism, including an indoor light and an indicator, which performs a lighting inside the vehicle, a door opening/closing mechanism that opens and closes a door, a door lock mechanism that locks a door, and a vehicle-level control mechanism that controls a level of the vehicle.

According to the invention set forth in claim 13, the on-vehicle equipment control method includes, by determining a situation a vehicle currently faces, controlling an air conditioning mechanism that performs an air conditioning inside a vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp, such as a headlight and a turn signal, an indoor lighting mechanism, including an indoor light and an indicator, that performs a lighting inside the vehicle, a door opening/closing mechanism that opens and closes a door, a door lock mechanism that locks a door, and a vehicle-level control mechanism that controls a vehicle level.

Furthermore, in the on-vehicle equipment control method according to claim 14, the situation determining step includes determining the situation based on at least one of time, predetermine path, vehicle location, rainfall outside the vehicle, light intensity outside the vehicle, identification of a passenger, smoking state of a passenger, external temperature, indoor temperature, and existence of a person near the vehicle.

According to the invention set forth in claim 14, the on-vehicle equipment control method includes determining a situation a vehicle currently faces, using a time, a predetermine path, a vehicle location, a rainfall outside a vehicle, a light intensity outside a vehicle, an identification of a passenger, a smoking state of a passenger, an external temperature, an indoor temperature, and an existence of a person around a vehicle, and performing a control of the vehicle equipment based on a determination result.

Furthermore, in the on-vehicle equipment control method according to claim 15, the situation determining step includes determining the situation based on running condition of the vehicle.

According to the invention set forth in claim 15, the on-vehicle equipment control method includes determining a situation a vehicle currently faces, using a running condition of the vehicle, and performs a control of the vehicle equipment based on a determination result.

Furthermore, in the on-vehicle equipment control method according to claim 16, the situation determining step includes classifying the running condition into parking, getting on the vehicle, preparation for driving, running, preparation for getting off the vehicle, and getting off the vehicle.

According to the invention set forth in claim 16, the on-vehicle equipment control method includes determining a situation a vehicle currently faces based on whether the running condition of the vehicle is in any one of a parking, a getting on a vehicle, a preparation for a driving, a driving, a preparation for getting off a vehicle, and a getting off a vehicle.

### EFFECT OF THE INVENTION

The on-vehicle equipment control apparatus according to the invention as set forth in claim 1 determines a situation a vehicle currently faces, performs a control of a vehicle equipment based on a determination result, and arbitrates contents of controls when a conflict of control requests occurs. Therefore, it is possible to realize the on-vehicle equipment control apparatus that integrally controls a plurality of the vehicle equipments.

The on-vehicle equipment control apparatus according to the invention as set forth in claim 2 performs a control of the vehicle equipment by determining a situation a vehicle currently faces, so that, when a conflict of control requests occurs, the on-vehicle equipment control apparatus sets a priority relation between controls, adjusts a timing of performing a control, and adjusts amounts for the control. Therefore, it is possible to realize the on-vehicle equipment control apparatus that arbitrates controls for the vehicle equipments.

The on-vehicle equipment control apparatus according to the invention as set forth in claim 3 generates a control request for other vehicle equipment in conjunction with contents of control, as well as to perform a control of the vehicle equipment by determining a situation a vehicle currently faces. Therefore, it is possible to realize the on-vehicle equipment control apparatus that performs a control of the vehicle equipments in an interlocked manner, by being adapted to the situation a vehicle currently faces.

The on-vehicle equipment control apparatus according to the invention as set forth in claim 4 performs a control of the vehicle equipment by determining a situation a vehicle currently faces, and prioritizes a control instruction input by a passenger when performing an arbitration or an interlocked operation of controls. Therefore, it is possible to realize the on-vehicle equipment control apparatus that performs a control of the vehicle equipments in an interlocked manner by being adapted to the situation a vehicle currently faces, and prioritizes a user operation.

The on-vehicle equipment control apparatus according to the invention as set forth in claim 5 controls, by determining a situation a vehicle currently faces, an air conditioning mechanism that performs an air conditioning inside a vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp, such as a headlight and a turn signal, an indoor lighting mechanism, including an indoor light and an indicator, that performs a lighting inside the vehicle, a door opening/closing mechanism that opens and closes a door, a door lock mechanism that locks a door, and a vehicle-level control mechanism that controls a vehicle level. Therefore, it is possible to realize the on-vehicle equipment control apparatus that performs a control of each of the vehicle equipments in an interlocked manner, by being adapted to the situation a vehicle currently faces.

The on-vehicle equipment control apparatus according to the invention as set forth in claim 6 determines a situation a vehicle currently faces, using a time, a predetermine path, a vehicle location, a rainfall outside a vehicle, a light intensity outside a vehicle, an identification of a passenger, a smoking state of a passenger, an external temperature, an indoor temperature, and an existence of a person around a vehicle, and performs a control of the vehicle equipment based on a determination result. Therefore, it is possible to realize the on-vehicle equipment control apparatus that performs an appropriate control by accurately determining a situation a vehicle faces.

The on-vehicle equipment control apparatus according to the invention as set forth in claim 7 determines a situation a vehicle currently faces, using a running condition of the vehicle, and performs a control of the vehicle equipment based on a determination result. Therefore, it is possible to realize the on-vehicle equipment control apparatus that integrally control the vehicle equipment depending on the running condition.

The on-vehicle equipment control apparatus according to the invention as set forth in claim 8 determines a situation a vehicle currently faces based on whether the running condition of the vehicle is in any one of a parking, a getting on a vehicle, a preparation for a driving, a driving, a preparation for getting off a vehicle, and a getting off a vehicle. Therefore, it is possible to realize the on-vehicle equipment control apparatus that integrally control the vehicle equipment accurately depending on the running condition.

A on-vehicle equipment control method according to the invention as set forth in claim 9 includes determining a situation a vehicle currently faces, performs a control of a vehicle equipment based on a determination result, and arbitrating contents of controls when a conflict of control requests occurs. Therefore, it is possible to realize the on-vehicle equipment control method of integrally controlling a plurality of the vehicle equipments.

The on-vehicle equipment control method according to the invention as set forth in claim 10 includes performing a control of the vehicle equipment by determining a situation a vehicle currently faces, so that, when a conflict of control requests occurs, the on-vehicle equipment control method includes setting a priority relation between controls, adjusting a timing of performing a control, and adjusting amounts for the control. Therefore, it is possible to realize the on-vehicle equipment control method of arbitrating controls for the vehicle equipments.

The on-vehicle equipment control method according to the invention as set forth in claim 11 includes generating a control request for other vehicle equipment in conjunction with contents of control, as well as performing a control of the vehicle equipment by determining a situation a vehicle currently faces. Therefore, it is possible to realize the on-vehicle equipment control method of performing a control of the vehicle equipments in an interlocked manner, in an adjustable manner to the situation the vehicle currently faces.

The on-vehicle equipment control method according to the invention as set forth in claim 12 includes performing a control of the vehicle equipment by determining a situation a vehicle currently faces, and prioritizing a control instruction input by a passenger when performing an arbitration or an interlocked operation of controls. Therefore, it is possible to realize the on-vehicle equipment control method of integrally performing a control of the vehicle equipments with prioritization of a user operation, in an adjustable manner to the situation the vehicle currently faces.

The on-vehicle equipment control method according to the invention as set forth in claim 13 includes, by determining a situation a vehicle currently faces, controlling an air conditioning mechanism that performs an air conditioning inside a vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp, such as a headlight and a turn signal, an indoor lighting mechanism, including an indoor light and an indicator, that performs a lighting inside the vehicle, a door opening/closing mechanism that opens and closes a door, a door lock mechanism that locks a door, and a vehicle-level control mechanism that controls a vehicle level. Therefore, it is possible to realize the on-vehicle equipment control method of integrally performing a control of each of the vehicle equipments in an adjustable manner to the situation the vehicle currently faces.

The on-vehicle equipment control method according to the invention as set forth in claim 14 includes determining a situation a vehicle currently faces, using a time, a predetermine path, a vehicle location, a rainfall outside a vehicle, a light intensity outside a vehicle, an identification of a passenger, a smoking state of a passenger, an external temperature, an indoor temperature, and an existence of a person around a vehicle, and performing a control of the vehicle equipment based on a determination result. Therefore, it is possible to realize the on-vehicle equipment control method of performing an appropriate control by accurately determining a situation a vehicle faces.

The on-vehicle equipment control method according to the invention as set forth in claim 15 includes determining a situation a vehicle currently faces, using a running condition of the vehicle, and performs a control of the vehicle equipment based on a determination result. Therefore, it is possible to realize the on-vehicle equipment control method of integrally controlling the vehicle equipment depending on the running condition.

The on-vehicle equipment control method according to the invention as set forth in claim 16 includes determining a situation a vehicle currently faces based on whether the running condition of the vehicle is in any one of a parking, a getting on a vehicle, a preparation for a driving, a driving, a preparation for getting off a vehicle, and a getting off a vehicle. Therefore, it is possible to realize the on-vehicle equipment control method of integrally controlling the vehicle equipment accurately depending on the running condition.

### BRIEF DESCRIPTION OF DRAWINGS

[Fig. 1] Fig. 1 is a schematic block diagram of a general configuration of an on-vehicle equipment including a vehicle equipment control unit according to an embodiment of the present invention.
[Fig. 2] Fig. 2 is a schematic diagram for explaining a control performed by the vehicle equipment control unit shown in Fig. 1.
[Fig. 3] Fig. 3 is a schematic diagram for explaining a conflict and an arbitration of controls.
[Fig. 4] Fig. 4 is a schematic diagram for explaining a detailed example of an arbitration control.
[Fig. 5] Fig. 5 is a schematic diagram for explaining an interlock of controls.
[Fig. 6] Fig. 6 is a flowchart for explaining a processing procedure performed by the vehicle equipment control unit shown in Fig. 1.
[Fig. 7] Fig. 7 is a schematic diagram for explaining a detailed example of a processing procedure performed by the vehicle equipment control unit shown in Fig. 1.

### EXPLANATIONS OF LETTERS OR NUMERALS

- 1: On-vehicle equipment
- 2: Navigation device
- 3: Input device
- 4: Vehicle control system
- 5: Indoor notification system
- 6: On-vehicle equipment
- 10: On-vehicle equipment control unit
- 11: Situation determining unit
- 12: Arbitration processing unit
- 13: Interlock processing unit
- 14: Control processing unit
- 31: Optical sensor
- 32: Rainfall sensor
- 33: Vehicle speed sensor
- 34: Smoking sensor
- 35: Outdoor temperature sensor
- 36: Indoor temperature sensor
- 37: Radar
- 38: Camera
- 41: Engine control mechanism
- 42: Brake control mechanism
- 43: Rudder control mechanism
- 51: Display
- 52: Speaker
- 60: Air conditioning mechanism
- 61: Ventilation control mechanism
- 62: Window opening/closing mechanism
- 63: Seat control mechanism
- 64: Seatbelt control mechanism
- 65: Lighting mechanism
- 66: Indoor lighting mechanism
- 67: Door opening/closing mechanism
- 68: Door lock mechanism
- 69: Vehicle-level control mechanism

### BEST MODE(S) FOR CARRYING OUT THE INVENTION

Exemplary embodiments of an on-vehicle equipment control device and an on-vehicle equipment control method of the present invention are explained in detail below with reference to the accompanying drawings.

### Embodiment

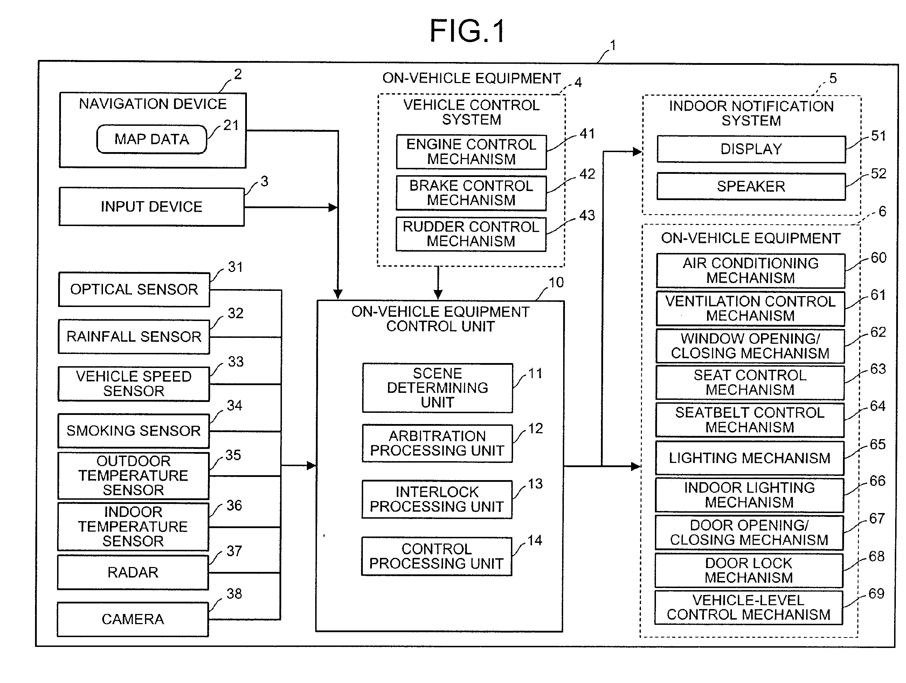

Fig. 1 is a schematic block diagram of a general configuration of an on-vehicle equipment 1 including an on-vehicle equipment control unit 10 according to an embodiment of the present invention. As shown in Fig. 1, in the on-vehicle equipment 1, the on-vehicle equipment control unit 10 is connected to a navigation device 2, an input device 3, a vehicle control system 4, an indoor notification system 5, an on-vehicle equipment 6, the on-vehicle equipment control unit 10, an optical sensor 31, a rainfall sensor 32, a vehicle speed sensor 33, a smoking sensor 34, an outdoor temperature sensor 35, an indoor temperature sensor 36, a radar 37, and a camera 38.

The navigation device 2 is an on-vehicle equipment that performs a setting and a guidance of a driving path, based on a location of a vehicle identified by communicating with a global positioning system (GPS) satellite, and map data 21. The guidance of the path is specifically performed using the indoor notification system 40. In addition, the navigation device 2 provides positional data of the vehicle and time information to the on-vehicle equipment control unit 10.

The input device 3 is a device, such as a switch and a touch panel, which receives an input of an operation from a passenger, and provides a received input of an operation to the on-vehicle equipment control unit 10. Furthermore, the input device 3 can be shared by the navigation device 2 and other devices.

The vehicle control system 4 is a device group that performs an operation control of a vehicle, and includes an engine control mechanism 41 that controls a performance of engine based on an operation of an accelerator, a brake control mechanism 42 that performs a braking of the vehicle based on an operation of a brake pedal, and a rudder control mechanism 43 that controls a rudder of the vehicle based on an operation of a handle.

The indoor notification system 5 is a device group that issues a notification to a passenger of the vehicle, and includes a display 51 that displays the notification thereon, and a speaker 52 that delivers the notification by voice. The indoor notification system 5 can be shared by the on-vehicle equipment control unit 10, the navigation device 2, and various on-vehicle equipments, such as an on-vehicle audio device.

The on-vehicle equipment 6 is a device group equipped on a vehicle, and specifically includes an air conditioning mechanism 60 that performs air conditioning inside a vehicle, a ventilation control mechanism 61 that controls an introduction state of an outdoor air in the vehicle, a window opening/closing mechanism 62 that opens and closes a window, a seat control mechanism 63 that controls a seat, a seatbelt control mechanism 64 that controls a state of a seatbelt, a lighting mechanism 65 that controls an on-vehicle lamp, such as a headlamp (headlight) and a turn signal (winker lamp), an indoor lighting mechanism 66, including an indoor light and an indicator, that performs a lighting inside the vehicle, a door opening/closing mechanism 67 that opens and closes a door, a door lock mechanism 68 that locks a door, and a vehicle-level control mechanism 69 that controls a vehicle level.

The optical sensor 31 is a sensor that detects light intensity (brightness) of the outside of a vehicle. The rainfall sensor 32 is a sensor that detects whether it is raining. The vehicle speed sensor 33 is a measuring mechanism that measures a speed of the vehicle. The outdoor temperature sensor 35 and the indoor temperature sensor 36 are measuring mechanisms that measure an external temperature and an indoor temperature, respectively. The radar 37 is a detecting mechanism that detects an obstacle around the vehicle using a millimeter wave or a micrometer wave. The camera 38 is an imaging mechanism that takes an image of an outside and an inside of the vehicle.

The on-vehicle equipment control unit 10 is a control unit that integrally controls an operation of the on-vehicle equipment 6, and includes a situation determining unit 11, an arbitration processing unit 12, an interlock processing unit 13, and a control processing unit 14.

The situation determining unit 11 determines a situation (scene) a vehicle currently faces, based on outputs from the navigation device 2, the input device 3, the vehicle control system 4, the optical sensor 31, the rainfall sensor 32, the vehicle speed sensor 33, the smoking sensor 34, the outdoor temperature sensor 35, the indoor temperature sensor 36, the radar 37, and the camera 38, in addition to a driving history (such as home address, parking place, departure time, driving route, destination, arrival time, routed place, parking duration) stored in a memory.

The control processing unit 14 performs a control of the on-vehicle equipment 6 depending on a situation (scene) obtained as a determination result from the situation determining unit 11. A notification issued by the indoor notification system 5 can be included in the above control, as appropriate.

The arbitration processing unit 12 performs a settlement of a conflict when a conflict occurs between control requests to the vehicle equipment, sets a priority relation between the controls, adjusts a timing of performing a control, and adjusts amounts for the control. The interlock processing unit 13 performs a process of generating a control request for other vehicle equipment, in conjunction with the contents of a control of the control processing unit 14.

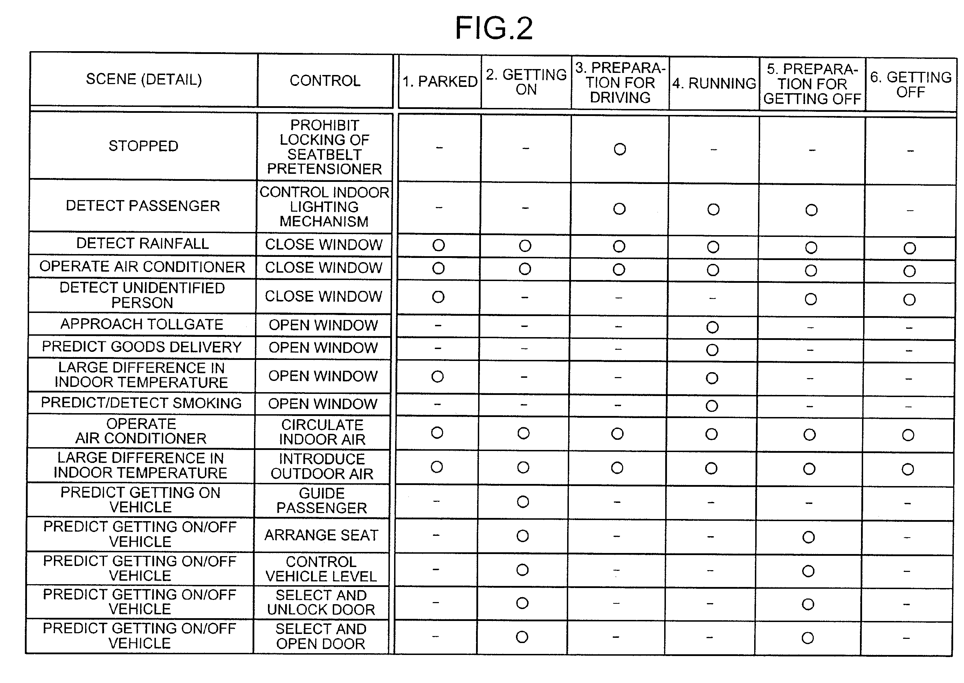

A control performed by the on-vehicle equipment control unit 10 is described in detail with reference to Fig. 2. As shown in Fig. 2, the situation determining unit 11 firstly determines whether a running condition of a vehicle is in "1. parked", "2. getting on", "3. preparation for driving", "4. running", "5. preparation for getting off", or "6. getting off".

"1. parked" corresponds to a state in which the vehicle is parked at a parking place or the like, and a passenger (specifically, a driver) is outside the vehicle. "2. getting on" corresponds to a state in which a passenger approaches the vehicle. "3. preparation for driving" corresponds to a state from a completion of getting on the vehicle to a start of a driving, in which a seat position is adjusted, a seatbelt is fastened, and a mirror is adjusted.

"4. running" corresponds to a state from a completion of a preparation for a driving to a start of a driving, including a state in which a vehicle speed is zero. "5. preparation for getting off" corresponds to a state from a finish of a driving to a start of getting off the vehicle. "6. getting off" corresponds to a state from a start of getting off the vehicle to an end of getting off the vehicle.

The situation determining unit 11 determines a situation (scene) in each of the running conditions, and the control processing unit 14 performs a corresponding control. For example, if a vehicle is stopped in the state of "3. preparation for driving", the seatbelt control mechanism 64 prohibits locking of a pretensioner. Accordingly, it is possible to prevent an occurrence of locking during an operation of fastening a seatbelt.

If a passenger is detected inside a vehicle in each of the states of "3. preparation for driving", "4. running", and "5. preparation for getting off", the indoor lighting mechanism 66 performs an automatic control. For example, although an indicator for a driver's seat, i.e., a lightning for a meter, normally works with the lighting mechanism 65 such as a headlight, the indicator is lighted up regardless of an operation state of the lighting mechanism 65 when a passenger is sitting on a driver's seat in the nighttime.

In addition, when rainfall is detected in each of the running conditions, windows are closed to prevent rain from falling into the vehicle. Similarly, when the air conditioning mechanism 60 is in operation, it is possible to improve an efficiency of an air conditioner by closing the windows. Furthermore, when an unidentified person is detected in the states of "1. parked", "5. preparation for getting off", and "6. getting off", it is preferable to close the windows.

On the other hand, because it is required to open a window for a fee payment at a tollgate, the window is automatically opened when it is detected that the vehicle is approaching the tollgate based on an output from the navigation device 2. Furthermore, if it is predicted that there is a need for delivering goods, based on an output from the radar 37 or the camera 38, it is preferable to open a window in a manner similar to the above.

If a temperature difference obtained by outputs from the outdoor temperature sensor 35 and the indoor temperature sensor 36 is large between an outside and an inside of the vehicle in the state of either "1. parked" or "4. running", it is possible to adjust an indoor temperature by performing a control of opening a window.

If it is detected or predicted that a passenger smokes in the state of "4. running", a ventilation is performed by opening a window. In this case, a smoking can be detected and predicted by the camera 38 as well as by a detection of opening/closing of an ashtray or a detection of an existence of smoke.

When detecting an operation of the air conditioning mechanism 60 in each of the running conditions, the efficiency of the air conditioner can be improved by circulating indoor air by a control of the ventilation control mechanism 61. When a temperature difference based on the outputs from the outdoor temperature sensor 35 and the indoor temperature sensor 36 is large between the outside and the inside of the vehicle, outdoor air is introduced into the vehicle by a control of the ventilation control mechanism 61 to prevent a glass from being fogged.

When predicting that a passenger is to get on the vehicle, based on a detection of an approach of a passenger to the vehicle by the radar 37 or the camera 38, the passenger is guided to a location of the vehicle by a control of the lighting mechanism 65 or a signal alarm (not shown).

When predicting that the passenger is getting on the vehicle, the passenger is assisted for getting on the vehicle, by performing a seat arrangement (control of an adjustment of a seat position or a backrest angle, performed by the seat control mechanism 63), a control of vehicle level depending on a height of the passenger, as well as a selection, an unlocking, and an opening of an appropriate door corresponding to an approaching direction of the passenger or depending on an obstacle around the vehicle.

Similarly, when detecting that the passenger gets off the vehicle, based on a detection of an engine stop or a seatbelt release, the passenger is assisted to get off the vehicle, by performing a seat arrangement (control of an adjustment of a seat position or a backrest angle, performed by the seat control mechanism 63), a control of vehicle level depending on a height of the passenger, as well as a selection, an unlocking, and an opening of an appropriate door corresponding to an approaching direction of the passenger or depending on an obstacle around the vehicle.

In this manner, the on-vehicle equipment control unit 10 appropriately operates the vehicle equipment depending on a situation in which the vehicle is currently located. However, a conflict of controls of the vehicle equipment possibly occurs in some cases.

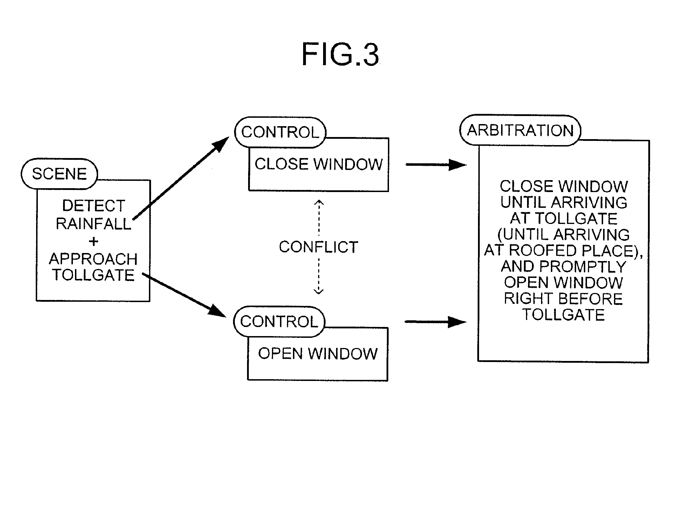

For example, a detection of rainfall and an approach to a tollgate possibly occur simultaneously. In this case, a control request for closing a window is issued for the detection of rainfall, while a control request for opening a window is issued for the approach of a tollgate, as shown in Fig. 3.

In this manner, if there is a conflict of the control requests, the arbitration processing unit 12 performs a settlement of the conflict, sets the priority relation between the controls, adjusts a timing of performing a control, and adjusts amounts for the control. In the example described in connection with Fig. 3, a control is performed to prevent rain from falling into the vehicle and to support a fee payment, in which a window is closed until the vehicle arrives at a tollgate (until arriving at a roofed place), and the window is promptly opened right before the tollgate (after arriving at the roofed place).

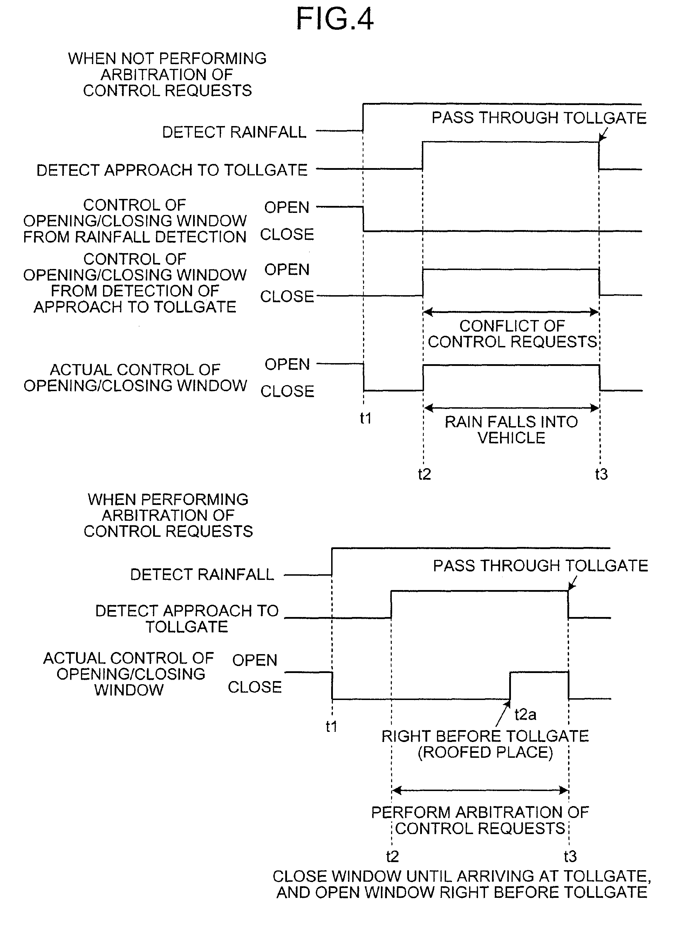

A control of opening a window is described in detail with reference to Fig. 4. In the example shown in Fig. 4, a rainfall is detected at a time t1, so that a control request for closing a window for preventing rain from falling into the vehicle is issued. Subsequently, an approach to a tollgate is detected at a time t2, so that a control request for opening a window is issued.

If one control request (in the example shown in Fig. 4, a control request for opening a window based on a detection of an approach to a tollgate) is simply prioritized over the other control request when the control requests conflict with each other as described above, the window is subjected to be open between the time t2, at which the approach to the tollgate is detected, and a time t3, at which the vehicle passes through the tollgate, so that rain falls into the vehicle.

In this case, with the arbitration performed by the arbitration processing unit 12, it is possible to perform a control, in which a window is closed until the vehicle arrives at the tollgate (until arriving at a roofed place), and the window is opened at a time t2a, at which the vehicle arrives at a position right before the tollgate (the roofed place).

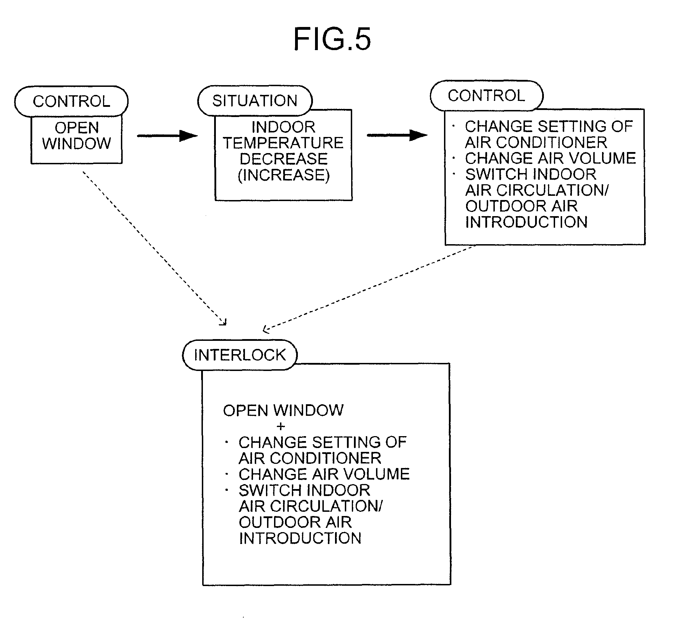

Furthermore, the other vehicle equipment may be triggered to perform a control based on a result of an operation of an vehicle equipment. For example, as shown in Fig. 5, when the window opening/closing mechanism 62 performs a control of opening a window, an indoor temperature increases (or decreases). In this case, it is often required for the air conditioning mechanism 60 to change a setting or an air volume, and for the ventilation control mechanism 61 to switch a state from an outdoor air introduction to an indoor air circulation.

Accordingly, the control processing unit 14 realizes an integrated control of a plurality of vehicle equipments by interlocking a control of changing the setting and the air volume performed by the air conditioning mechanism 60 with a control of an operation performed by the ventilation control mechanism 61, when the window opening/closing mechanism 62 performs a control of opening a window

When a passenger, specifically a driver, directly instructs an operation of the on-vehicle equipment 6 via the input device 3, a control request based on the instruction from the passenger is prioritized over the request controls based on a situation determination, an arbitration, or an interlock operation.

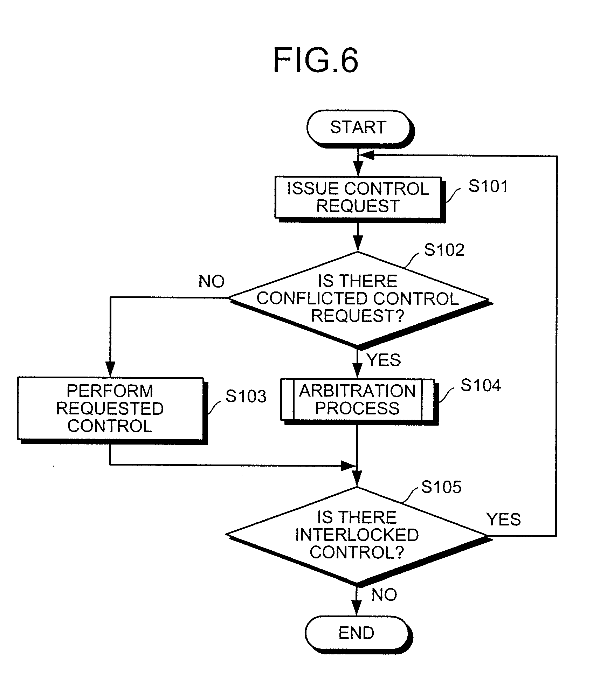

Subsequently, a processing procedure performed by the on-vehicle equipment control unit 10 is described with reference to a flowchart shown in Fig. 6. A processing flow shown in Fig. 6 is started when a control of the on-vehicle equipment 6 is required resulting from a situation determination by the situation determining unit 11.

When a control of the on-vehicle equipment 6 is required, a control request for requiring an execution of a control is issued (step S101). The arbitration processing unit 12 determines whether there is a control conflicted with an issued control (step S102). As a result of a determination, if there is no conflicted control (No at step S102), the control processing unit 14 passes the issued control request to the on-vehicle equipment 6 to perform a required control (step S103).

On the other hand, if there is a conflicted control (Yes at step S102), the arbitration processing unit 12 generates contents of control by performing a settlement of the conflicted controls, and the control processing unit 14 passes an arbitrated control request to the on-vehicle equipment 6 (step S104).

Subsequently, the interlock processing unit 13 determines whether there is an interlocked control (step S105). If there is no interlocked control (No at step S105), the process control ends. If there is the interlocked control (Yes at step S105), the process control returns to step S101.

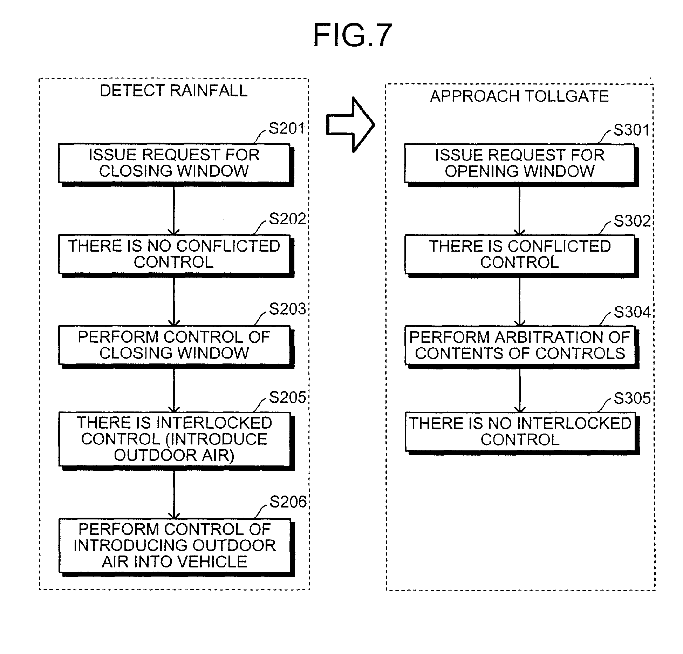

A detailed example of the processing flow shown in Fig. 6 is described with reference to Fig. 7. As shown in Fig. 7, when the situation determining unit 11 detects rainfall, a request to the window opening/closing mechanism 62 for closing a window is issued (step S201).

Because there is no control conflicted with the above request (step S202), the control of closing a window is performed (step S203). In addition, because there is a control of introducing an outdoor air into the vehicle, which is interlocked with the above control (step S205), a process control proceeds to perform a control of introducing an outdoor air into the vehicle (step S206).

After a control based on the detection of rainfall, if the vehicle approaches a tollgate, a request to the window opening/closing mechanism 62 for opening a window is issued (step S301).

In this case, because a conflicted request for closing a window has already been issued (step S302), the arbitration processing unit 12 performs an arbitration of the contents of controls (step S304). Because there is no control interlocked with the above control (step S305), the process control ends.

As described above, in the on-vehicle equipment control unit 10, the situation determining unit 11 determines a situation (scene) at which a vehicle is currently located, based on an output from the navigation device 2, the input device 3, the vehicle control system 4, the optical sensor 31, the rainfall sensor 32, the vehicle speed sensor 33, the smoking sensor 34, the outdoor temperature sensor 35, the indoor temperature sensor 36, the radar 37, and the camera 38, in addition to a driving history (such as home address, parking place, departure time, driving route, destination, arrival time, routed place, parking duration) stored in a memory. The control processing unit 14 performs a control of the on-vehicle equipment 6 depending on the situation (scene) obtained as a determination result from the situation determining unit 11. The arbitration processing unit 12 performs a settlement of a conflict when a conflict occurs between control requests for the vehicle equipment. The interlock processing unit 13 performs a process of generating a control request for other vehicle equipment, in conjunction with the contents of a control of the control processing unit 14.

Therefore, it is possible to realize an integrated control of a plurality of vehicle equipments appropriate for a situation a vehicle currently faces.

### INDUSTRIAL APPLICABILITY

As described above, according to an on-vehicle equipment control device and an on-vehicle equipment control method are suitable for supporting a running of a vehicle, and particularly for an advanced automatic control of a vehicle equipment.

## Claims

1. An on-vehicle equipment control apparatus that controls an on-vehicle equipment equipped on a vehicle, the on-vehicle equipment control apparatus comprising:
a situation determining unit that determines a situation the vehicle currently faces;
a control processing unit that performs a control of the vehicle equipment based on a result of determination by the situation determining unit; and
an arbitration processing unit that determines, when a conflict of control requests for the vehicle equipment occurs, contents of the control by settling the conflict of the control requests, wherein
the control processing unit performs the control based on the contents of the control determined by the arbitration processing unit.

2. The on-vehicle equipment control apparatus according to claim 1, wherein when different control requests are issued to an identical vehicle equipment, the arbitration processing unit performs setting a priority in the control requests, adjusting a timing of performing each of the controls, and adjusting an amount for each of the controls.

3. The on-vehicle equipment control apparatus according to claim 1 or 2, further comprising an interlock processing unit that generates a control request for other vehicle equipment in conjunction with the contents of the control determined by the control processing unit.

4. The on-vehicle equipment control apparatus according to any one of claims 1 to 3, wherein upon receiving an input of a control instruction from a passenger, the control processing unit processes the control instruction in priority to a control from any one of the arbitration processing unit and the interlock processing unit.

5. The on-vehicle equipment control apparatus according to any one of claims 1 to 4, wherein the vehicle equipment includes at least one of an air conditioning mechanism that performs an air conditioning inside the vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp including a headlight and a turn signal, an indoor lighting mechanism, including an indoor light and an indicator, which performs a lighting inside the vehicle, a door opening/closing mechanism that opens and closes a door, a door lock mechanism that locks a door, and a vehicle-level control mechanism that controls a level of the vehicle.

6. The on-vehicle equipment control apparatus according to any one of claims 1 to 5, wherein the situation determining unit determines the situation based on at least one of time, predetermine path, vehicle location, rainfall outside the vehicle, light intensity outside the vehicle, identification of a passenger, smoking state of a passenger, external temperature, indoor temperature, and existence of a person near the vehicle.

7. The on-vehicle equipment control apparatus according to claim 6, wherein the situation determining unit determines the situation based on running condition of the vehicle.

8. The on-vehicle equipment control apparatus according to claim 7, wherein the situation determining unit classifies the running condition into parking, getting on the vehicle, preparation for driving, running, preparation for getting off the vehicle, and getting off the vehicle.

9. An on-vehicle equipment control method of controlling an on-vehicle equipment equipped on a vehicle, the on-vehicle equipment control method comprising:
a situation determining step of determining a situation the vehicle currently faces;
a control processing step of performing a control of the vehicle equipment based on a result of determination at the situation determining step; and
an arbitration processing step of determining, when a conflict of control requests for the vehicle equipment occurs, contents of the control by settling the conflict of the control requests, wherein
the control processing step includes performing the control based on the contents of the control determined at the arbitration processing step.

10. The on-vehicle equipment control method according to claim 9, wherein when different control requests are issued to an identical vehicle equipment, the arbitration processing step includes setting a priority in the control requests, adjusting a timing of performing each of the controls, and adjusting an amount for each of the controls.

11. The on-vehicle equipment control method according to claim 9 or 10, further comprising an interlock processing step of generating a control request for other vehicle equipment in conjunction with the contents of the control determined at the control processing step.

12. The on-vehicle equipment control method according to any one of claims 9 to 11, wherein upon receiving an input of a control instruction from a passenger, the control processing step includes processing the control instruction in priority to a control from any one of the arbitration processing step and the interlock processing step.

13. The on-vehicle equipment control method according to any one of claims 9 to 12, wherein the vehicle equipment includes at least one of an air conditioning mechanism that performs an air conditioning inside the vehicle, a ventilation control mechanism that controls an introduction state of an outdoor air in the vehicle, a window opening/closing mechanism that opens and closes a window, a seat control mechanism that controls a seat, a seatbelt control mechanism that controls a state of a seatbelt, a lighting mechanism that controls an on-vehicle lamp including a headlight and a turn signal, an indoor lighting mechanism, including an indoor light and an indicator, which performs a lighting inside the vehicle, a door opening/closing mechanism that opens and closes a door, a door lock mechanism that locks a door, and a vehicle-level control mechanism that controls a level of the vehicle.

14. The on-vehicle equipment control method according to any one of claims 9 to 13, wherein the situation determining step includes determining the situation based on at least one of time, predetermine path, vehicle location, rainfall outside the vehicle, light intensity outside the vehicle, identification of a passenger, smoking state of a passenger, external temperature, indoor temperature, and existence of a person near the vehicle.

15. The on-vehicle equipment control method according to claim 14, wherein the situation determining step includes determining the situation based on running condition of the vehicle.

16. The on-vehicle equipment control method according to claim 15, wherein the situation determining step includes classifying the running condition into parking, getting on the vehicle, preparation for driving, running, preparation for getting off the vehicle, and getting off the vehicle.
